# EUROPÄISCHE PATENTSCHRIFT

(11) **EP 0 502 431 B1**
(45) Veröffentlichungstag und Bekanntmachung des Hinweises auf die Patenterteilung: **03.05.1995**
(21) Anmeldenummer: 92103419.5
(22) Anmeldetag: 28.02.1992
(51) Int. Cl.: A22C 13/00

(54) **Schlauchförmige Nahrungsmittelhülle mit verbesserter Abschälbarkeit**
Tubular casings for foodstuffs with an improved peel-off ability
Enveloppes tubulaires pour aliment ayant une pelabilité améliorée

(30) Priorität: 07.03.1991 DE 4107238; 26.06.1991 DE 4121068
(43) Veröffentlichungstag der Anmeldung: 09.09.1992
(73) Patentinhaber: HOECHST AKTIENGESELLSCHAFT, 65926 Frankfurt am Main (DE)
(72) Erfinder: Hammer, Klaus-Dieter, Dr., W-6500 Mainz-Mombach (DE); Siebrecht, Manfred, Dr., W-6200 Wiesbaden (DE); Winter, Hermann, W-6200 Wiesbaden (DE)

(56) Entgegenhaltungen:
- EP-A- 0 038 628
- EP-A- 0 088 308
- EP-A- 0 109 611
- EP-A- 0 400 484
- DE-A- 1 492 711
- GB-A- 1 086 604
- US-A- 3 451 827

## Beschreibung

Die Erfindung bezieht sich auf eine schlauchförmige Nahrungsmittelhülle auf Basis von Cellulose mit einem auf ihrer inneren Oberfläche vorhandenen Überzug zur Verbesserung der Abschälbarkeit der Hülle vom Füllgut und auf die Verwendung der Nahrungsmittelhülle.

Die EP-A-0 088 308 beschreibt eine Hülle mit den Merkmalen des Oberbegriffs des Anspruchs 1. Außerdem erwähnt diese Druckschrift die Verwendung von Casein im Überzug der Hülle.

Hüllen der gattungsgemäßen Art sind auch aus der EP-A-0 109 611 bekannt und besitzen auf ihrer Innenseite einen Überzug aus einer Mischung aus einem wasserlöslichen Celluloseäther, einem Wachs und einem Öl. Eine aus der DE-A-34 47 026 bekannte Hülle gleicher Gattung enthält in einem innenseitig aufgebrachten Überzug neben einer Chrom-Fettsäure-Komplexverbindung und einem Dialkylpolysiloxan zusätzlich ebenfalls Celluloseäther und Wachs. Alle bekannten Rezepturen zur Verbesserung der Abschälbarkeit besitzen relativ komplizierte Zusammensetzungen, und sie lassen, insbesondere bei problematischen Füllgütern, im Hinblick auf ihre Wirksamkeit noch zu wünschen übrig.

Ferner ist aus der ES-B-549,161 eine Überzugszusammensetzung für Cellulosehüllen bekannt, die Lecithin und einen Celluloseäther enthält.

Aufgabe der vorliegenden Erfindung war es, eine Nahrungsmittelhülle mit einer Innenbeschichtung anzugeben, bei der die Beschichtungszusammensetzung aus möglichst wenig Einzelkomponenten aufgebaut ist und die trotzdem ein breites Wirkungsspektrum besitzt, was ihre Abschälbarkeit von verschiedenen Füllgütern betrifft.

Gelöst wird diese Aufgabe durch eine Nahrungsmittelhülle der eingangs genannten Gattung, deren Kennzeichenmerkmal darin besteht, daß der Überzug Lecithin und Alginat und/oder Chitosan und/oder Casein enthält.

Bei der erfindungsgemäßen Nahrungsmittelhülle handelt es sich insbesondere um eine künstliche Wursthülle. Der spezielle Überzug auf der Innenseite zeigt verringerte Haftung zwischen der Innenwand der Hülle und dem für mittel- und großkalibrige Hüllen und Kranzdarm typischen Füllgut, insbesondere wenn das Füllgut ein Wurstbrät ist für Blutwurstsorten wie Rotwurst, Thüringer, Sülzwurst, roten Preßsack oder Preßkopf, für Brühwürste wie Jagdwurst, Bierschinken, Fleischwurst, Mortadella, Gelbwurst oder Lyoner oder für Rohwurst wie Mettwurst, wobei letztere insbesondere in gekrümmten oder ringförmigen Hüllen aus Cellulose ohne Faserverstärkung hergestellt wird.

Die Nahrungsmittelhülle besteht aus einem Trägerschlauch auf Basis von Cellulose und dem zur Verbesserung der Abschälbarkeit der Hülle vom Füllgut vorgesehenen Überzug auf ihrer Innenwand.

Das Basismaterial für den Trägerschlauch ist Cellulose (Zellglas, regenerierte Cellulose, Cellulosehydrat) und wird auf übliche Weise als nahtloser Schlauch durch Koagulation und Regenerieren vorzugsweise aus Viskoselösung hergestellt. Es ist auch möglich, Schläuche mit einer Klebenaht zu verwenden, die durch Falten einer Bahn und Verbinden der Ränder hergestellt werden (EP-A-0 050 702, EP-A-0 058 240). Für die besonders vorteilhafte Verwendung der Hülle zur Herstellung von Würsten vom Blutwurst- oder Brühwurst-Typ verwendet man einen Trägerschlauch aus Cellulose mit einer Faserverstärkung, die beispielsweise in Form einer Papierbahn in der Wandung des Trägerschlauchs eingebettet ist. Zur Herstellung von gekrümmten oder ringförmigen Würsten wie Rohwürste, insbesondere grobe Mettwürste, verwendet man Trägerschläuche in gekrümmter oder in abgerundeter Ringform, sogenannte Kranzdärme, welche keine Faserverstärkung aufweisen. Die Krümmung wird beispielsweise durch einseitige Verdehnung des Schlauches bei seiner Herstellung erzeugt, es sind aber auch andere Verfahren bekannt (US-A-2,136,566, US-A-2,925,621, US-A-3,679,435, EP-A-0 050 702.

Die Nahrungsmittelhülle kann als flachgelegter Schlauch, auf eine Rolle aufgewickelt oder in Form von einseitig verschlossenen Hüllenabschnitten zum Füllen mit Füllgut eingesetzt werden. Es lassen sich auch geraffte Schlauchhüllen, sogenannte Raupen, herstellen, wobei man übliche Raffvorrichtungen (US-A-3,988,804) einsetzt. Hierbei hat sich gezeigt, daß mit der Innenbeschichtung nicht nur eine verbesserte Trennwirkung zwischen Füllgut und Hülleninnenwand erzielt wird, sondern daß sich auch noch zusätzliche Vorteile beim Aufwickeln, Lagern, Raffen und Verarbeiten ergeben. So sorgt die Innenbeschichtung dafür, daß die auf einer Rolle aufgewickelten Schläuche nicht haften oder verkleben. Auch Hüllenabschnitte verkleben bei längerer Lagerung nicht und lassen sich vor dem Befüllen mit Wurstbrät, insbesondere auf automatischen Füllmaschinen, problemlos öffnen. Ferner sind die Schläuche besonders gleitfähig und weich und lassen sich deshalb problemlos raffen.

Der Überzug enthält erfindungsgemäß Lecithin und Alginat und/oder Chitosan und/oder Casein. Lecithin gehört zu den Phosphatiden, bei denen die Phosphorsäure einerseits mit Cholin und andererseits mit Glycerin verestert ist, wobei die übrigen Hydroxylgruppen des Glycerins selbst wieder mit langkettigen Fettsäuren verestert sind. Lecithin als solches ist ein Naturprodukt, und man erhält bei seiner Extraktion aus biologischem Material fast immer Gemische, bedingt durch die Verschiedenheit der Fettsäurereste. Durch die quartäre Ammoniumgruppe des Cholinrestes besitzt die Substanz eine hohe Affinität zu dem Cellulosehydrat der Hüllenwandung. Sie läßt sich daher gut auftragen und haftet fest.

Weiterhin enthält der erfindungsgemäße Überzug neben Lecithin auch Alginat, insbesondere Natrium-Alginat, oder Chitosan oder Casein oder eine Mischung aus zwei oder drei dieser Substanzen. Bevorzugt sind Kombinationen aus Lecithin und Alginat sowie Lecithin und Casein.

Alginate sind Salze der Alginsäure, insbesondere Alkali- oder Erdalkalisalze. Alginsäure selbst ist ein farbloses, Carboxylgruppen enthaltendes Polysaccharid mit einem mittleren Molekulargewicht zwischen 100 000 und 240 000. Chemisch besteht Alginsäure aus 1,4-glykosidisch verknüpften D-Mannuronsäureeinheiten mit gelegentlichen Einschüben von Á-glykosidisch gebundenen L-Guluronsäureeinheiten. Alginsäure als solche ist ein Naturprodukt und findet sich in beträchtlichen Mengen in den Braunalgen des Meeres.

Die Chitosane sind eine Verbindungsgruppe, die sich von natürlich vorkommendem Chitin ableitet. Sie entstehen durch Desacetylierung und teilweise Depolymerisierung von Chitin mit Hilfe von starken Alkalien. Chemisch handelt es sich um β-glykosidisch gebundene Poly-N-acetylglucosamine, deren Acetylgruppen durch die Einwirkung der starken Alkalien in mehr oder weniger großem Umfang verseift sind. Die Chitosane besitzen ein mittleres Molekulargewicht von etwa 400 000.

Casein gehört zu den Milcheiweißen, sogenannten Lactalalbuminen, und ist ein Phosphoprotein, das als lösliches Calciumsalz in der Milch enthalten ist. Nach der chemischen Struktur des Caseins ist die Phosphorsäure esterartig an eine freie OH-Gruppe gebunden. Dieser Phosphorsäurerest läßt sich z. B. durch Natronlauge leicht abspalten.

Die Auftragsmenge aller Wirkkomponenten liegt erfindungsgemäß im Bereich von 200 bis 900 mg/m², vorzugsweise im Bereich von 400 bis 800 mg/m², Trockengewicht. Der Auftrag erfolgt erfindungsgemäß aus einer wässrigen Überzugszusammensetzung mit einer Lecithin-Konzentration im Bereich von 6 bis 15 Gew.-%, vorzugsweise im Bereich von 8 bis 12 Gew.-%, bezogen auf das Gesamtgewicht der Überzugszusammensetzung. Casein wird bevorzugt in einer Menge von 1 bis 5 Gew.-% und Alginat und Chitosan bevorzugt in Mengen von jeweils 1 bis 3 Gew.-%, ebenfalls bezogen auf das Gesamtgewicht der wässrigen Überzugszusammensetzung, eingesetzt.

Die erfindungsgemäße Nahrungsmittelhülle wird hergestellt nach den üblichen Verfahren zur Herstellung von Nahrungsmittelhüllen, insbesondere Wursthüllen, auf Basis von Cellulose, die sich vom Füllgut, insbesondere von der Wurstmasse, leicht abschälen lassen.

Der Auftrag der Innenbeschichtung auf die Innenseite der Schlauchhülle erfolgt auf übliche Weise, beispielsweise durch Einfüllen einer Beschichtungsflüssigkeit in die Schlauchhülle (GB-A-1 201 830, US-A-2,901,358, DE-A-28 01 038, DE-C-30 12 250) oder durch Aufsprühen der Beschichtungsflüssigkeit in die Schlauchhülle während des Raffprozesses, z. B. durch den hohlen Raffdorn (US-A-3,451,827). Die Auftragstemperatur ist gewöhnlich gleich der Umgebungstemperatur, d. h. sie liegt bei etwa 15 bis 30 °C.

Das Einfüllen der Beschichtungsflüssigkeit in die Schlauchhülle erfolgt zweckmäßigerweise bereits bei der Herstellung der Schlauchhülle, z. B. nach der Fällung des Cellulosehydrat-Gels aus Viskose und vor der Trocknung.

Wenn die erfindungsgemäßen Wursthüllen bei ihrem bestimmungsgemäßen Einsatzzweck mit Wurstbrät befüllt, gebrüht und geräuchert werden, lassen sich die Hüllen auf automatischen Schälvorrichtungen völlig problemlos entfernen. Dies gelingt überraschend auch bei Brühwursttypen wie Fleischwurst, und der erfindungsgemäße Überzug hat sich sowohl bei Cellulosehüllen als auch bei faserverstärkten Cellulosehüllen in der Praxis bewährt.

Sehr gute Schälergebnisse wurden auch bei sehr langsam und unter milden Bedingungen reifenden Salamitypen in Faserhüllen, sogenannte kalifornische Salami, beobachtet.

Durch die Kombination des Lecithins mit Alginat und/oder Chitosan und/oder Casein lassen sich die Hafteigenschaften von Wursthüllen, insbesondere bei zweitverpackter oder getauchter Dauerwurst, so gezielt einstellen, daß die gute Schälbarkeit der Hüllen bis zum Ende des Reifeprozesses nicht abklingt.

Die Erfindung wird durch die folgenden Beispiele näher erläutert, ohne jedoch auf die speziell dargestellten Ausführungsformen beschränkt zu sein.

### Beispiel 1

Ein Faserdarm wird auf seiner Innenseite mit folgender Lösung imprägniert:
8,316 Gew.-Tl. Wasser
0,300 Gew.-Tl. Milcheiweiß FN 4 (Rovita)
0,400 Gew.-Tl. Glycerin
0,167 Gew.-Tl. 1 n Natronlauge
0,017 Gew.-Tl. Glyoxal (40%ig)
0,800 Gew.-Tl. Lecithin 250 W
Die Hülle ist zur Füllung mit Salamibrät bestimmt. Die Salami wird nach ca. 8 Tagen Reifezeit in einer Kunststoffolie als Griffschutz zweitverpackt. Nach mindestens 3 Wochen Lagerzeit läßt sich die Hülle einwandfrei abschälen, während die mit reiner Haftimprägnierung ohne Lecithin-/Milcheiweißzusatz hergestellte Hülle sehr schwer und unter Herausreißen des Wurstbräts entfernbar ist.

### Beispiel 2

Eine zu einem Kranz geformte Cellulosehülle wird auf der Innenseite mit folgender Peel-Imprägnierung versehen:
8,588 Gew.-Tl. Wasser
0,200 Gew.-Tl. Na-Alginat (Protacell 20, Hersteller Protan, Norwegen)
1,200 Gew.-Tl. Lecithin 250 W
0,012 Gew.-Tl. Genapol x-080
Die Hülle wird mit grobem Mettwurstbrät gefüllt und geräuchert. Sie ist sofort und nach einigen Tagen Lagerung sehr gut abschälbar, ohne jedoch vom Brät abzustellen.

## Patentansprüche

1. Schlauchförmige Nahrungsmittelhülle auf Basis von Cellulose mit einem auf ihrer inneren Oberfläche vorhandenen Überzug zur Verbesserung der Abschälbarkeit der Hülle vom Füllgut, dadurch gekennzeichnet, daß der Überzug Lecithin sowie eine oder mehrere Verbindungen, ausgewählt aus der Gruppe Alginat, Chitosan und Casein, enthält.

2. Nahrungsmittelhülle nach Anspruch 1, dadurch gekennzeichnet, daß es sich um eine künstliche Wursthülle handelt.

3. Nahrungsmittelhülle nach Anspruch 1 oder 2, dadurch gekennzeichnet, daß die Cellulose durch Koagulation und Regenerieren aus Viskoselösung hergestellt ist.

4. Nahrungsmittelhülle nach einem der Ansprüche 1 bis 3, dadurch gekennzeichnet, daß die Auftragsmenge des Überzuges im Bereich von 200 bis 900 mg/m² Trockengewicht liegt.

5. Nahrungsmittelhülle nach Anspruch 4, dadurch gekennzeichnet, daß die Auftragsmenge der Wirkkomponenten des Überzuges im Bereich von 400 bis 800 mg/m² Trockengewicht liegt.

6. Nahrungsmittelhülle nach einem der Ansprüche 1 bis 5, dadurch gekennzeichnet, daß der Auftrag des Überzuges aus einer wässrigen Überzugszusammensetzung mit einer Konzentration an Lecithin im Bereich von 6 bis 15 Gew.-%, bezogen auf das Gesamtgewicht der Überzugszusammensetzung, erfolgt.

7. Nahrungsmittelhülle nach Anspruch 6, dadurch gekennzeichnet, daß der Auftrag des Überzuges aus einer wässrigen Überzugszusammensetzung mit einer Konzentration an Lecithin im Bereich von 8 bis 12 Gew.-%, bezogen auf das Gesamtgewicht der Überzugszusammensetzung, erfolgt.

8. Nahrungsmittelhülle nach einem der Ansprüche 1 bis 7, dadurch gekennzeichnet, daß der Überzug Casein in einer Menge von 1 bis 5 Gew.-%, bezogen auf das Gesamtgewicht der wässrigen Überzugszusammensetzung, und/oder Alginat und/oder Chitosan in Mengen von jeweils 1 bis 3 Gew.-%, ebenfalls bezogen auf das Gesamtgewicht der wässrigen Überzugszusammensetzung, enthält.

9. Verwendung einer Nahrungsmittelhülle nach einem der Ansprüche 1 bis 8 als Wursthülle für Brühwursttypen wie Fleischwurst oder für Salami.

## Claims

1. Tubular food casing based on cellulose which on its inner surface is provided with a coating for improving its peelability from its contents, characterized in that said coating comprises lecithin and one or several compounds selected from the group including alginate, chitosan and casein.

2. Food casing as claimed in claim 1, characterized in that it is a synthetic sausage casing.

3. Food casing as claimed in claim 1 or 2, characterized in that the cellulose is produced by coagulation and regeneration from a viscose solution.

4. Food casing as claimed in any of claims 1 to 3, characterized in that the applied amount of the coating is in the range of 200 to 900 mg/m² of dry weight.

5. Food casing as claimed in claim 4, characterized in that the applied amount of active components of the coating is in the range of 400 to 800 mg/m² of dry weight.

6. Food casing as claimed in any of claims 1 to 5, characterized in that application of the coating is performed from an aqueous coating composition having a concentration of lecithin in the range of 6 to 15 % by weight, relative to the total weight of the coating composition.

7. Food casing as claimed in claim 6, characterized in that application of the coating is performed from an aqueous coating composition having a concentration of lecithin in the range of 8 to 12 % by weight, relative to the total weight of the coating composition.

8. Food casing as claimed in any of claims 1 to 7, characterized in that the coating contains casein in an amount of 1 to 5 % by weight, relative to the total weight of the aqueous coating composition, and/or alginate and/or chitosan, which are each present in an amount of 1 to 3 % by weight, likewise relative to the total weight of the aqueous coating composition.

9. Use of a food casing as claimed in any of claims 1 to 8 as a sausage casing for cooked sausages, such as finely minced pork sausage, or for salami-type sausage.

## Revendications

1. Enveloppe tubulaire pour aliments, à base de cellulose et pourvue sur sa surface interne d'un revêtement pour améliorer sa pelabilité par rapport à la masse de remplissage, caractérisée en ce que le revêtement contient de la lécithine ainsi qu'un ou plusieurs composé(s) choisi(s) dans le groupe formé par un alginate, le chitosane et la caséine.

2. Enveloppe pour aliments selon la revendication 1, caractérisée en ce qu'il s'agit d'un boyau artificiel de saucisse.

3. Enveloppe pour aliment selon la revendication 1 ou 2, caractérisée en ce que la cellulose est produite par coagulation et régénération à partir d'une solution de viscose.

4. Enveloppe pour aliments selon une quelconque des revendications 1 à 3, caractérisée en ce que la quantité de revêtement déposé est comprise entre 200 et 900 mg/m² (poids à sec).

5. Enveloppe pour aliments selon la revendication 4, caractérisée en ce que la quantité déposée de constituants actifs du revêtement est comprise entre 400 et 800 mg/m² (poids à sec).

6. Enveloppe pour aliments selon une quelconque des revendications 1 à 5, caractérisée en ce que la couche de revêtement est réalisée à partir d'une composition d'enduction aqueuse dont la concentration en lécithine est comprise entre 6 et 15 % en poids, par rapport au poids total de la composition d'enduction.

7. Enveloppe pour aliments selon la revendication 6, caractérisée en ce que la couche de revêtement est réalisée à partir d'une composition d'enduction aqueuse dont la concentration en lécithine est comprise entre 8 et 12 % en poids, par rapport au poids total de la composition d'enduction.

8. Enveloppe pour aliments selon une quelconque des revendications 1 à 7, caractérisée en ce que le revêtement contient de la caséine à raison de 1 à 5 % en poids, par rapport au poids total de la composition aqueuse d'enduction, et/ou un aliginate et/ou du chitosane à raison chacun de 1 à 3 % en poids, également par rapport au poids total de la composition aqueuse d'enduction.

9. Utilisation d'une enveloppe pour aliments selon une quelconque des revendications 1 à 8, comme boyau de saucisse pour des saucisses à cuire du type saucisse de viande ou pour du salami.
